# EUROPEAN PATENT APPLICATION

(11) **EP 2 821 177 A1**
(43) Date of publication of application: **07.01.2015**
(21) Application number: 12869913.9
(22) Date of filing: 27.02.2012
(51) Int. Cl.: B23P 19/00, H02K 15/14

(54) **ROBOT SYSTEM**

(71) Applicant: Kabushiki Kaisha Yaskawa Denki, Kitakyushu-shi, Fukuoka 806-0004 (JP)
(72) Inventor: OKAMOTO, Takeshi, Kitakyushu-shi Fukuoka 806-0004 (JP); MOTONAGA, Kenichi, Kitakyushu-shi Fukuoka 806-0004 (JP); MATSUMURA, Jun, Kitakyushu-shi Fukuoka 806-0004 (JP); KITAGAWA, Teruhisa, Kitakyushu-shi Fukuoka 806-0004 (JP); NAGASHIMA, Ryoji, Kitakyushu-shi Fukuoka 806-0004 (JP)
(74) Representative: Grünecker, Kinkeldey, Stockmair & Schwanhäusser
(86) International application number: PCT/JP2012/054773
(87) International publication number: WO 2013/128548

(57) **Abstract**

A robot system capable of accurately measuring assembly accuracy of a workpiece formed to include a rotation shaft is provided. To implement such a robot system, a robot system (1) according to an aspect of the present embodiment includes a robot (10) and an accuracy measurement device (40). The robot (10) transfers a workpiece formed to include a rotation shaft. The accuracy measurement device (40) holds the rotation shaft of the workpiece transferred by the robot (10) to be substantially parallel to the vertical direction, and measures assembly accuracy of the workpiece while rotating the rotation shaft to rotate the whole of the workpiece.

## Description

### Field

The embodiment discussed herein relates to a robot system.

### Background

Various types of robot systems have been developed that use robots in, for example, production lines of workpieces to automate work that was done manually.

Examples of the robot systems include an automatic measurement system (see Patent Literature 1, for example) that automatically measures the shape of a workpiece or the shapes of various types of mechanical parts (hereinafter referred to as "workpieces") to be assembled into the workpiece.

Such an automatic measurement system measures the shape of various types of mechanical parts and workpieces transferred onto a conveyor by a robot by using an image measurement method performing image processing or a contact measurement method using a probe, in most cases.

### Citation List

### Patent Literature

Patent Literature 1: Japanese Patent Application Laid-open No. H10-288518

### Summary

### Technical Problem

However, there is still much room for improvement in the way the above-described automatic measurement system measures the shape of a workpiece, such as a motor, that is formed to include a rotation shaft and that operates with rotational movements.

For example, a motor is normally required to rotate a shaft that is a rotation shaft accurately without an axial run-out. In order to meet the requirement, accurate measurement is needed on squareness and concentricity, relative to the shaft, of a member that rotatably supports the shaft.

In the conventional technology, however, a subject is measured on the conveyor in a static state, which causes difficulty in accurately measuring the above-described squareness and concentricity in some cases.

In view of the description above, it is an object of an aspect of the present embodiment to provide a robot system that can accurately measure assembly accuracy of a workpiece that is formed to include a rotation shaft.

### Solution to Problem

A robot system according to an aspect of an embodiment includes a robot and an accuracy measurement device. The robot transfers a workpiece formed to include a rotation shaft. The accuracy measurement device holds the rotation shaft of the workpiece transferred by the robot to be substantially parallel to the vertical direction, and measures assembly accuracy of the workpiece while rotating the rotation shaft to rotate the whole of the workpiece.

### Advantageous Effects of Invention

According to an aspect of the present embodiment, it is possible to accurately measure assembly accuracy of a workpiece that is formed to include a rotation shaft.

### Brief Description of Drawings

FIG. 1 is a top schematic view illustrating an entire configuration of a robot system according to an embodiment.
FIG. 2 is a schematic perspective view illustrating a configuration of a robot.
FIG. 3A is a schematic perspective view illustrating a configuration of a robot hand.
FIG. 3B is a schematic perspective view illustrating a state in which the robot hand holds a motor.
FIG. 4 is a schematic perspective view of a cogging torque measurement device.
FIG. 5A is a front view of an accuracy measurement device.
FIG. 5B is a side view of the accuracy measurement device.
FIG. 6A is a schematic side view of the motor.
FIG. 6B is a schematic view illustrating a load side of the motor.
FIG. 6C is a schematic view illustrating an anti-load side of the motor.
FIG. 7A is a diagram illustrating movements of the accuracy measurement device.
FIG. 7B is a schematic view illustrating sensors provided in the accuracy measurement device.
FIG. 7C is a schematic view illustrating the sensors provided in the accuracy measurement device.
FIG. 8 is a schematic perspective view of a seal insertion device.
FIG. 9A is a diagram illustrating a preparation operation for seal insertion.
FIG. 9B is a diagram illustrating the preparation operation for seal insertion.
FIG. 10A is a schematic perspective view of a grease application device.
FIG. 10B is a diagram illustrating a grease application operation.
FIG. 10C is a diagram illustrating a seal insertion operation.
FIG. 10D is a diagram illustrating the seal insertion operation.
FIG. 11A is a schematic side view of an adhesive application device.
FIG. 11B is a diagram illustrating an example of a camera provided in the adhesive application device.
FIG. 12 is a schematic perspective view of a buffer stage.

### Description of Embodiment

The following describes in detail an embodiment of a robot system disclosed in the present invention with reference to the accompanying drawings. The embodiment described below is not intended to limit the scope of the present invention.

The embodiment below describes a motor roughly assembled in a preceding process as a workpiece, and describes, as an example, a robot system that measures assembly accuracy of the motor and performs other operations. In the embodiment below, assembly accuracy is represented by, for example, geometric characteristics such as squareness and concentricity.

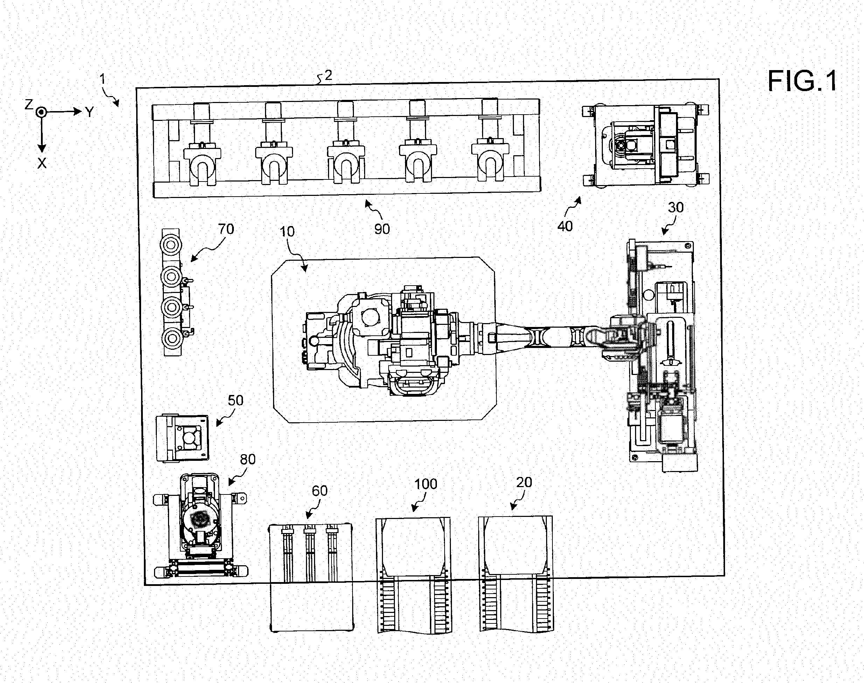

FIG. 1 is a top schematic view illustrating an entire configuration of a robot system 1 according to the embodiment. For the purpose of making the description clear, FIG. 1 illustrates a three-dimensional orthogonal coordinate system including the Z-axis with the positive direction being upward in the vertical direction. Such an orthogonal coordinate system may be indicated in other drawings used for the description below.

When a constituent element is configured by a plurality of elements, there is a case in which a reference sign is only given to one of the elements and is not given to the other elements in the accompanying drawings. In this case, the element to which the reference sign is given has the same configuration as that of the other elements.

As illustrated in FIG. 1, the robot system 1 includes a cell 2 forming a work space having a rectangular solid shape. In the cell 2, the robot system 1 includes a robot 10, a carry-in path 20, a cogging torque measurement device 30, an accuracy measurement device 40, a seal insertion device 50, a seal storage 60, a grease application device 70, an adhesive application device 80, a buffer stage 90, and a carry-out path 100.

The cell 2 is provided with an opening (not illustrated) through which the carry-in path 20, the seal storage 60, and the carry-out path 100 lead to the outside of the cell 2. The devices including the robot 10 in the cell 2 are connected to a control device (not illustrated) such that information can be communicated with each other.

The control device is a controller that controls operations of the devices connected thereto, and is configured by various kinds of control modules, an arithmetic processing unit, and a storage device, for example.

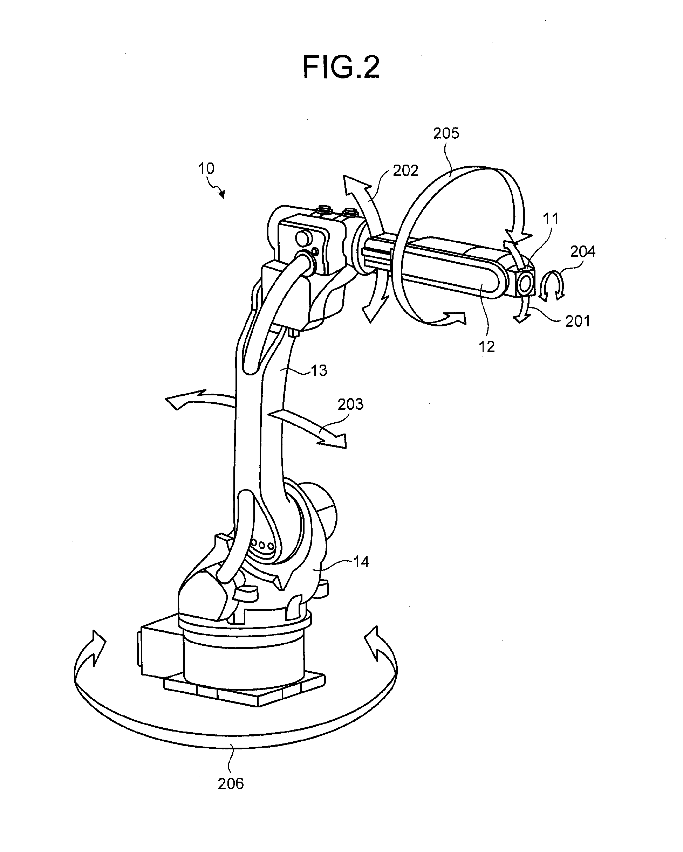

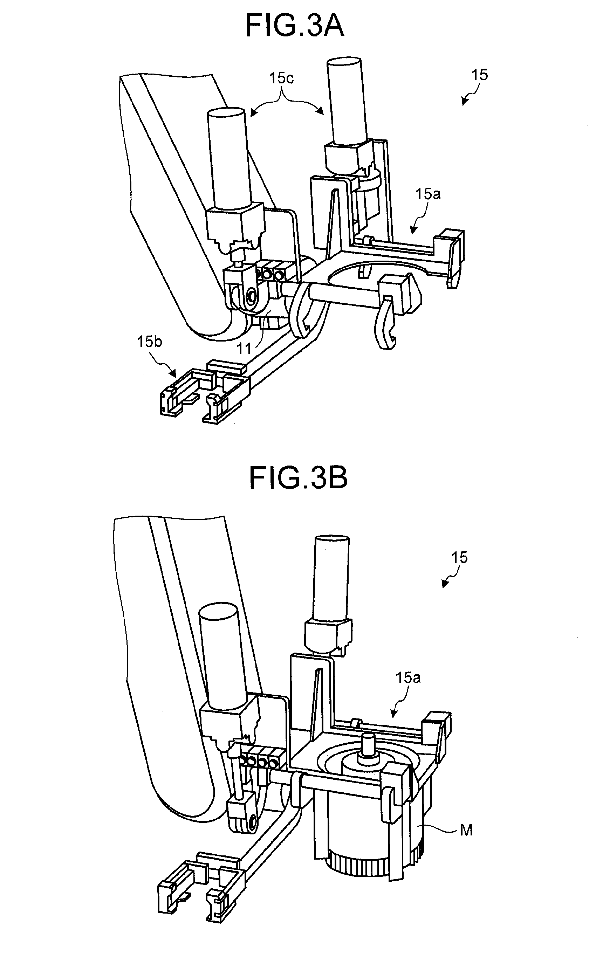

The robot 10 is a manipulator that operates upon receiving an operation instruction from the control device, and includes a robot hand (to be described below) as an end effector. The detailed configuration of the robot 10 will be described later with reference to FIGS. 2, 3A, and 3B.

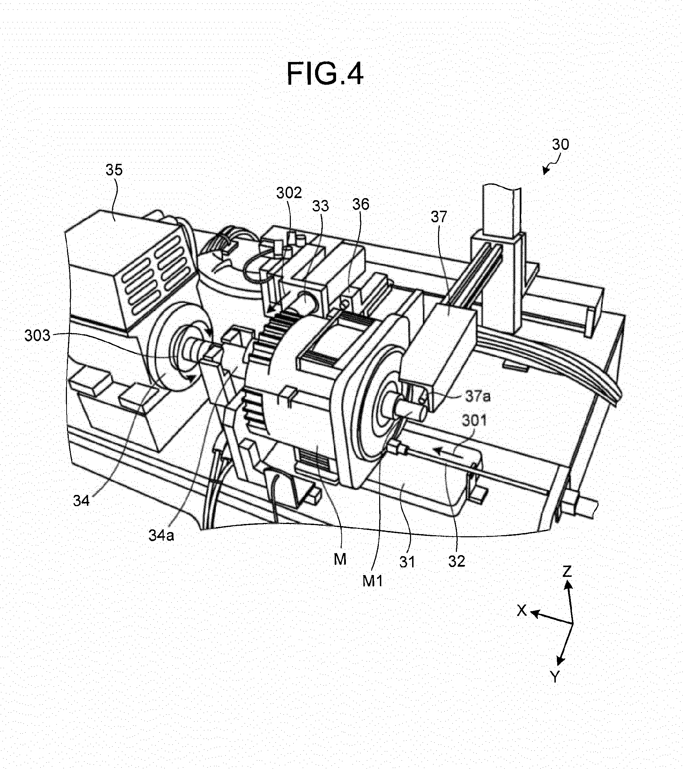

Through the carry-in path 20, a motor roughly assembled at a preceding process is carried in. The cogging torque measurement device 30 measures cogging torque and axial run-out of the motor transferred from the carry-in path 20 by the robot 10. Details of the cogging torque measurement device 30 will be described later with reference to FIG. 4.

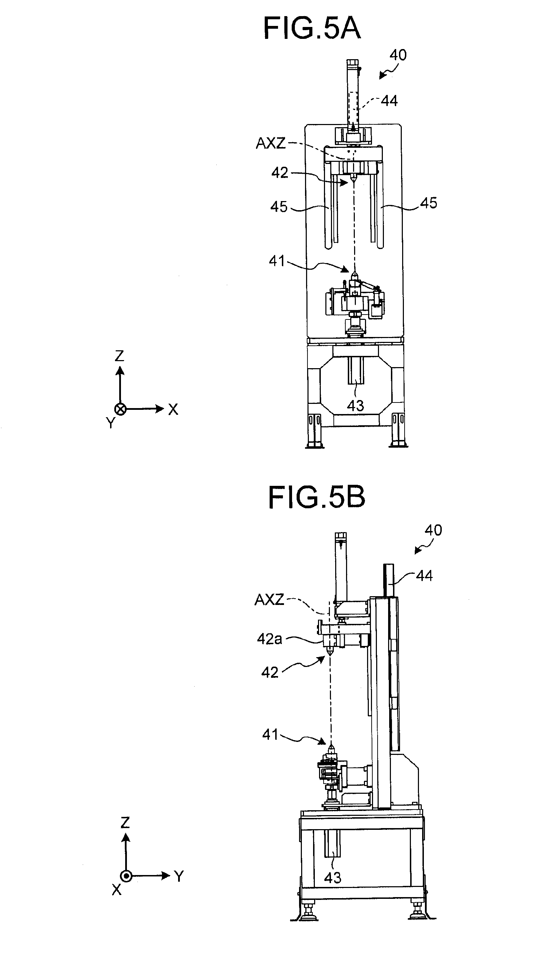

The accuracy measurement device 40 measures geometric characteristics of the motor transferred from the cogging torque measurement device 30 by the robot 10. Details of the accuracy measurement device 40 will be described later with reference to FIGS. 5A and 5B, 6A to 6C, and 7A to 7C.

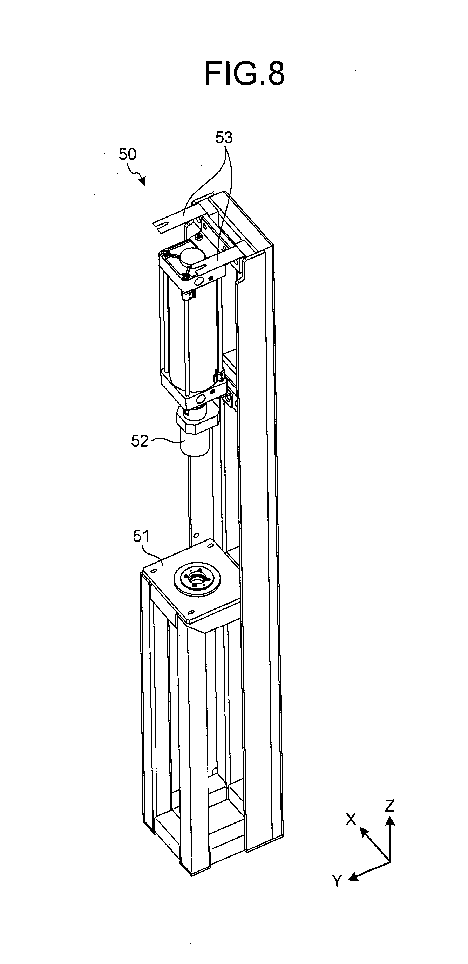

The seal insertion device 50 seals, with a seal member, a circumference of a shaft in a load-side bracket of the motor transferred from the accuracy measurement device 40 by the robot 10. The seal member is taken out from the seal storage 60 by the robot 10, and then grease is applied to the seal member by the grease application device 70. A series of operations performed by the seal insertion device 50 will be described later with reference to FIGS. 8, 9A and 9B, and 10A to 10D.

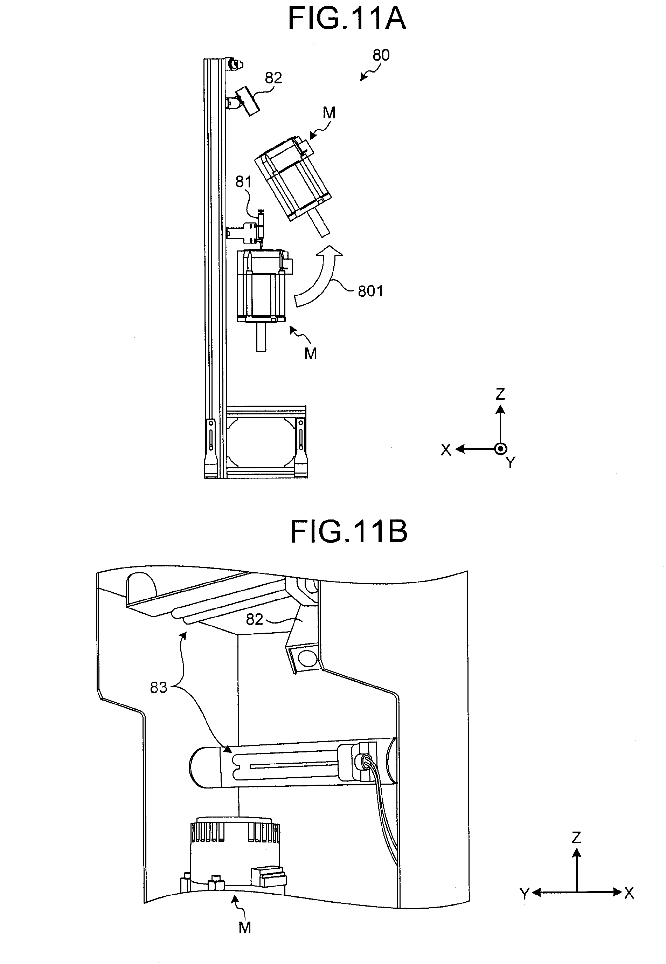

The adhesive application device 80 applies adhesive to a gap between an outer race of a bearing and an anti-load side bracket of the motor transferred from the seal insertion device 50 by the robot 10 to fix the bearing. The adhesive application device 80 checks an application state of the adhesive by using a camera. Details of the adhesive application device 80 will be described later with reference to FIGS. 11A and 11B.

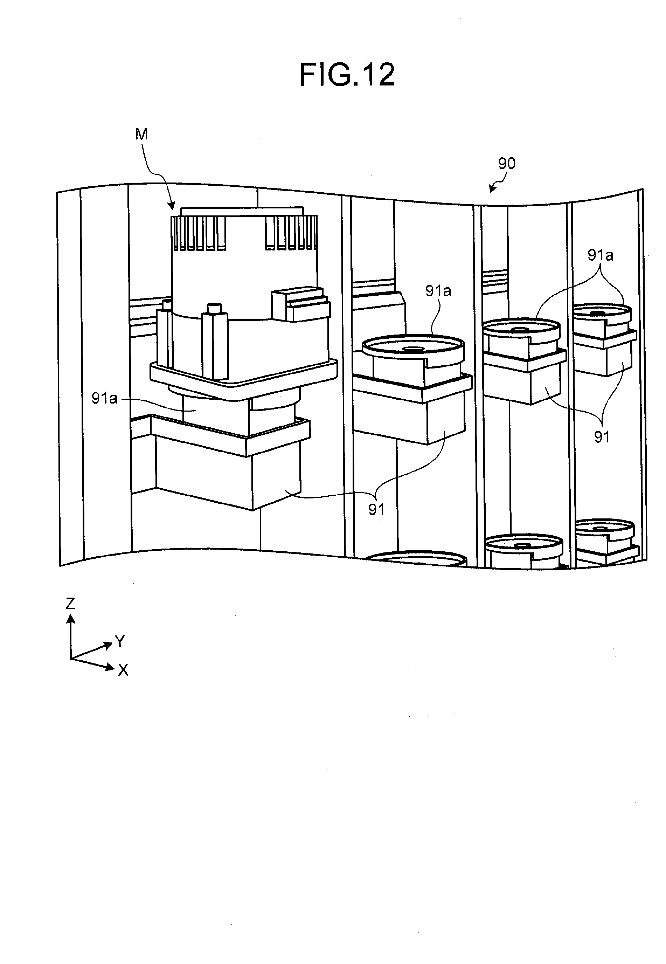

The buffer stage 90 provides an area on which adhesive is dried for a specified time period for the motor transferred from the adhesive application device 80 by the robot 10. The buffer stage 90 will be described later with reference to FIG. 12.

Through the carry-out path 100, a motor that has completed all the processes in the cell 2 is carried out. The carry-out path 100 may also convey a motor determined to be abnormal in the cell 2, that is, for example, a motor with a geometric characteristic measured by the accuracy measurement device 40 being out of an allowable range. In the present embodiment, motors are carried out through the carry-out path 100 in both cases in which motors are determined to be normal and in which motors are determined to be abnormal.

Described next is an example of a configuration of the robot 10 with reference to FIG. 2. FIG. 2 is a schematic perspective view illustrating a configuration of the robot 10.

As illustrated in FIG. 2, the robot 10 is a single-arm multiple-axis robot. Specifically, the robot 10 includes a first arm part 11, a second arm part 12, a third arm part 13, and a fourth arm part 14.

The base end of the first arm part 11 is supported by the second arm part 12. The base end of the second arm part 12 is supported by the third arm part 13 and the leading end of the second arm part 12 supports the first arm part 11.

The base end of the third arm part 13 is supported by the fourth arm part 14 and the leading end of the third arm part 13 supports the second arm part 12. The base end of the fourth arm part 14 is supported by a base (not illustrated) fixed, for example, on a floor of the cell 2 (see FIG. 1), and the leading end of the fourth arm part 14 supports the third arm part 13.

Actuators are mounted on respective joints (not illustrated) connecting the first arm part 11 and the second arm part 12, the second arm part 12 and the third arm part 13, and the third arm part 13 and the fourth arm part 14. The robot 10 is driven by the actuators, thereby performing multiple-axis operations.

Specifically, an actuator mounted on a joint connecting the first arm part 11 and the second arm part 12 swings the first arm part 11 in the directions indicated by a double-pointed arrow 201 around the joint. An actuator mounted on a joint connecting the second arm part 12 and the third arm part 13 swings the second arm part 12 in the directions indicated by a double-pointed arrow 202 around the joint.

An actuator mounted on a joint connecting the third arm part 13 and the fourth arm part 14 swings the third arm part 13 in the directions indicated by a double-pointed arrow 203 around the joint.

The robot 10 also includes actuators that individually rotate the first arm part 11 in the directions indicated by a double-pointed arrow 204, the second arm part 12 in the directions indicated by a double-pointed arrow 205, and the fourth arm part 14 in the directions indicated by a double-pointed arrow 206.

A robot hand is mounted on the leading end of the first arm part 11. Described next is an example of a configuration of the robot hand with reference to FIGS. 3A and 3B. FIG. 3A is a schematic perspective view illustrating a configuration of a robot hand 15. FIG. 3B is a schematic perspective view illustrating a state in which the robot hand 15 holds a motor M.

As illustrated in FIG. 3A, the robot hand 15 includes a first gripper 15a, a second gripper 15b, and gripper drivers 15c. The first gripper 15a includes four holding claws. The holding claws holds the motor M by holding a flange formed on the load side of the motor M as illustrated in FIG. 3B.

As illustrated in FIG. 3A, the second gripper 15b includes two holding claws and holds, with the holding claws, a relatively small member such as a seal member (to be described later). The gripper drivers 15c actuate the first gripper 15a and the second gripper 15b on the basis of a drive instruction received from the control device described above.

The robot hand 15 is mounted on the first arm part 11 also illustrated in FIG. 2 in a fixed state. In other words, the robot hand 15 can rotate together with the first arm part 11 in the directions indicated by the double-pointed arrow 204 (see FIG. 2), whereby the robot hand 15 can flexibly change the orientation of the motor M and the seal member held by the grippers along the directions indicated by the double-pointed arrow 204.

Described next is an example of a configuration of the cogging torque measurement device 30 with reference to FIG. 4. FIG. 4 is a schematic perspective view of the cogging torque measurement device 30. Cogging torque indicated herein is magnetic attraction power occurring in the radial direction when a shaft M1 (and a rotator fixed thereto) is rotated in a non-excitation state.

As illustrated in FIG. 4, the cogging torque measurement device 30 includes a motor slider 31, a first positioner 32, a second positioner 33, a rotation mechanism 34, a torque measurement unit 35, a brake releasing unit 36, and an axial run-out measurement unit 37.

First, the motor M is transferred from the carry-in path 20 to the motor slider 31 by the robot 10. The motor slider 31 is a table on which the motor M is placed and that is slidably disposed along the X-axis direction in FIG. 4.

The motor M is placed on the motor slider 31 with the load side facing in the negative direction of the X axis and the anti-load side facing in the positive direction of the X axis.

The first positioner 32 pushes the load side bracket of the motor M in the direction indicated by an arrow 301 in FIG. 4 to slide the motor M together with the motor slider 31, so that the shaft M1 of the motor M is connected to an outer shaft 34a included in the rotation mechanism 34.

The second positioner 33 then locks the connecting part of the outer shaft 34a and the shaft M1 from the direction indicated by an arrow 302 in FIG. 4. Thus, the shaft M1 is held by the rotation mechanism 34 on the anti-load side of the motor M.

The rotation mechanism 34 rotates the outer shaft 34a in the directions indicated by a double-pointed arrow 303 to rotate the shaft M1 in a non-excitation state. The torque measurement unit 35 measures cogging torque occurring when the shaft M is rotated. During the measurement, the brake of the motor M is released by the brake releasing unit 36.

At the same time as cogging torque is measured, the axial run-out measurement unit 37 measures axial run-out of the shaft M1 with a sensor 37a to be contact with the shaft M1 on the load side of the motor M.

The cogging torque measurement device 30 informs the control device of measurement results of cogging torque and axial run-out. When the measurement results fall within an allowable range, the control device instructs the robot 10 to transfer the motor M to the accuracy measurement device 40. When the measurement results do not fall within the allowable range, the control device instructs the robot 10 to transfer the motor M to the carry-out path 100.

Described next is an example of a configuration of the accuracy measurement device 40 with reference to FIGS. 5A and 5B. FIG. 5A is a front view of the accuracy measurement device 40, and FIG. 5B is a side view of the accuracy measurement device 40.

As illustrated in FIGS. 5A and 5B, the accuracy measurement device 40 includes a first holder 41 (first holder), a second holder 42 (second holder), a first servomotor 43 (driving source), a second servomotor 44, and slide grooves 45.

The first holder 41 has a leading end formed in a shape of a substantial circular cone. The first holder 41 is connected with the first servomotor 43 and is rotated by rotational drive of the first servomotor 43 around an axis AXZ that is substantially parallel to the vertical direction. The leading end of the first holder 41 is formed with a protrusion (not illustrated) to be fitted into an end of the shaft M1 on the anti-load side.

The second holder 42 has a leading end formed in a shape of a substantial circular cone in the same manner as in the case of the first holder 41. The second holder 42 is rotatably supported by a bearing (not illustrated) at a base 42a thereof and is disposed such that the second holder 42 can rotate freely around the axis AXZ.

The second holder 42 is driven by the second servomotor 44 so that it can slide along the slide grooves 45 cut along a direction substantially parallel to the vertical direction, whereby the height position of the leading end of the second holder 42 can be adjusted flexibly.

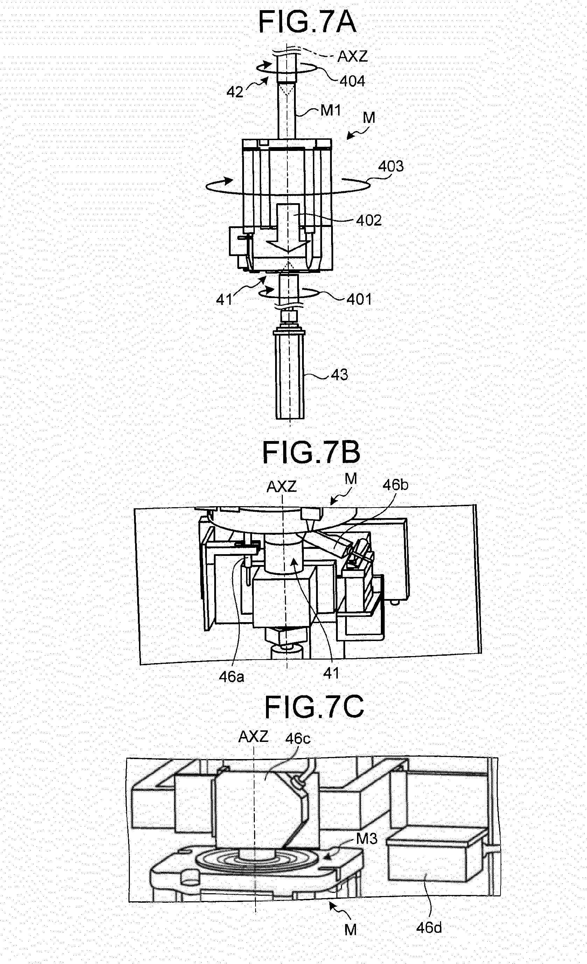

The accuracy measurement device 40 also includes sensors for measuring geometric characteristics of the motor M, and the details thereof will be described later with reference to FIGS. 7B and 7C.

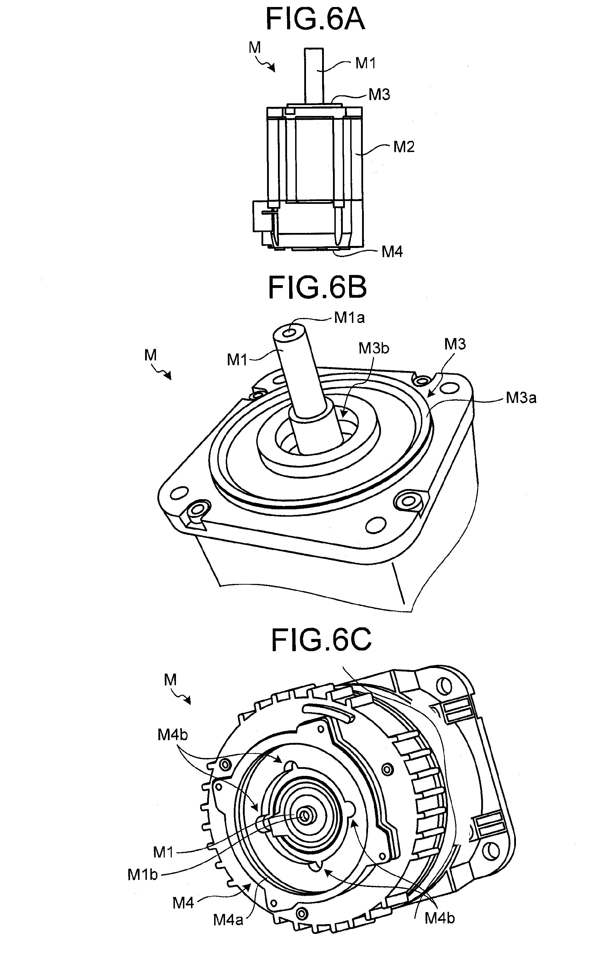

With regard to the geometric characteristics, described herein is the shape of the motor M with reference to FIGS. 6A to 6C. FIG. 6A is a schematic side view of the motor M. FIG. 6B is a schematic view illustrating the load side of the motor M. FIG. 6C is a schematic view illustrating the anti-load side of the motor M.

As illustrated in FIG. 6A, the motor M is a workpiece formed in a substantially columnar shape including the shaft M1 that is the rotation shaft. The substantially columnar shape is formed such that a rotator (not illustrated) including the shaft M1 is disposed in a position opposite to a stator (not illustrated) fixed along the internal circumference of a housing M2 having a substantially cylindrical shape, a bracket M3 is mounted on the load side of the housing M2, and a bracket M4 is mounted on the anti-load side of the housing M2.

As illustrated in FIG. 6B, the bracket M3 includes a ridge M3a having a shape of a concentric circle with the center being the axis of the shaft M1. The ridge M3a is used as a fitting part when the motor M is mounted as a complete product. The shaft M1 has a hollow structure and has an aperture M1a on an end of the shaft M1 on the load side. The aperture M1a is used as a fitted part into which the above-described protrusion provided on the leading end of the second holder 42 is inserted.

The accuracy measurement device 40 measures concentricity of the ridge M3a relative to the shaft M1. The accuracy measurement device 40 also measures squareness of the rim of the ridge M3a.

As illustrated in FIG. 6B, the bracket M3 includes a sealed part M3b along the circumference of the shaft M1. The sealed part M3b will be described later in the description of the seal insertion device 50.

As illustrated in FIG. 6C, the bracket M4 includes a recess M4a having a shape of a concentric circle with the center being the axis of the shaft M1. The recess M4a is also used as a fitting part as described above. The accuracy measurement device 40 measures concentricity of the recess M4a relative to the shaft M1. The accuracy measurement device 40 also measures squareness of the bottom surface of the recess M4a.

As illustrated in FIG. 6C, the shaft M1 has an aperture M1b on an end of the shaft M1 on the anti-load side. The aperture M1b is used as a fitted part into which the above-described protrusion provided on the leading end of the first holder 41 is inserted.

As illustrated in FIG. 6C, the bracket M4 has adhering holes M4b. The adhering holes M4b will be described later in the description of the adhesive application unit 80.

Described next is a series of operations performed by the accuracy measurement device 40 with reference to FIGS. 7A to 7C. FIG. 7A is a diagram illustrating movements of the accuracy measurement device 40. FIGS. 7B and 7C are schematic views illustrating sensors included in the accuracy measurement device 40.

While transferred from the cogging torque measurement device 30 by the robot 10, the motor M is turned into a position with the anti-load side thereof facing downward in the vertical direction. The motor M is then placed on the first holder 41, as illustrated in FIG. 7A, with the leading end of the first holder 41 inserted into the aperture M1b (see FIG. 6C) of the shaft M1.

The second holder 42 slides down to lower the height position thereof, so that the leading end of the second holder 42 is inserted into the aperture M1a (see FIG. 6B) of the shaft M1, thereby being fitted with the shaft M1. In other words, the motor M is held with the shaft M1 being pushed by the first holder 41 and the second holder 42 from both ends thereof.

The first holder 41 is rotationally driven by the first servomotor 43 to rotate around the axis AXZ (see an arrow 401 in FIG. 7A). At this time, frictional force corresponding to the load of the motor M indicated by an arrow 402 in FIG. 7A is applied to the leading end of the first holder 41. Thus, the rotation of the first holder 41 rotates the entire motor M (see an arrow 403 in FIG. 7A).

The second holder 42, which can freely rotate around the axis AXZ as described above, follows the rotation of the first holder 41 (see an arrow 404 in FIG. 7A). In other words, the motor M is rotated by the accuracy measurement device 40 around the axis AXZ with the shaft M1 held in a position along the axis AXZ that is substantially parallel to the vertical direction.

This enables the accuracy measurement device 40 to measure geometric characteristics such as concentricity accurately and easily. The accuracy measurement device 40 rotates the shaft M1 while holding the shaft M1 in a position along the vertical direction. This evenly applies loads in the direction of rotation, thereby smoothly rotating the motor M. In other words, the accuracy measurement device 40 can accurately measures the assembly accuracy of the motor M.

The accuracy measurement device 40 holds both ends of the shaft M1 with the first holder 41 and the second holder 42 each having a leading end formed in a shape of a substantial circular cone. This can easily fix the axis of the shaft M1. In other words, this can accurately rotate the motor M, whereby the assembly accuracy of the motor M can be measured accurately.

Described here are the sensors that measure geometric characteristics. As illustrated in FIG. 7B, the accuracy measurement device 40 includes a first sensor 46a and a second sensor 46b near the first holder 41.

The first sensor 46a measures squareness of the bracket M4 (see FIG. 6C) on the anti-load side of the motor M. The second sensor 46b measures concentricity of the bracket M4.

When a recessed shape such as the recess M4a (see FIG. 6C) of the bracket M4 is measured, it is preferable to use contact sensors for the first sensor 46a and the second sensor 46b. It should be noted that this does not exclude the use of non-contact sensors for the first sensor 46a and the second sensor 46b.

As illustrated in FIG. 7C, the accuracy measurement device 40 includes a third sensor 46c and a fourth sensor 46d. The third sensor 46c measures squareness of the bracket M3 on the load side of the motor M. The fourth sensor 46d measures concentricity of the bracket M3.

When a ridged shape such as the ridge M3a (see FIG. 6B) of the bracket M3 is measured, non-contact sensors can be used for the third sensor 46c and the fourth sensor 46d. When these non-contact sensors are movable, the accuracy measurement device 40 can perform measurement irrespective of the size of the motor M. It should be noted that this does not exclude the use of contact sensors for the third sensor 46c and the fourth sensor 46d.

The accuracy measurement device 40 can measure the assembly accuracy on the load side and the anti-load side of the motor M by using these sensors while rotating the motor M. This enables the accuracy measurement device 40 to perform accurate measurement and also improves the throughput.

The accuracy measurement device 40 informs the control device of measurement results of the geometric characteristics in the same manner as in the case of the cogging torque measurement device 30. When the measurement results fall within an allowable range, the control device instructs the robot 10 to transfer the motor M to the seal insertion device 50. When the measurement results do not fall within the allowable range, the control device instructs the robot 10 to transfer the motor M to the carry-out path 100.

Described next is an example of a configuration of the seal insertion device 50 with reference to FIG. 8. FIG. 8 is a schematic perspective view of the seal insertion device 50.

As illustrated in FIG. 8, the seal insertion device 50 includes a table 51, a seal insertion unit 52, and a jig hanger 53.

The table 51 is a table on which the motor M is placed, the motor M having been transferred from the accuracy measurement device 40 by the robot 10. The motor M is placed on the table 51 with the load side facing upward in the vertical direction.

The seal insertion unit 52 is configured by, for example, an air cylinder, and inserts a seal member (to be described later) into the sealed part M3b (see FIG. 6B) of the bracket M3. The jig hanger 53 hangs a seal insertion jig (to be described later) and has two plates disposed at the top end thereof.

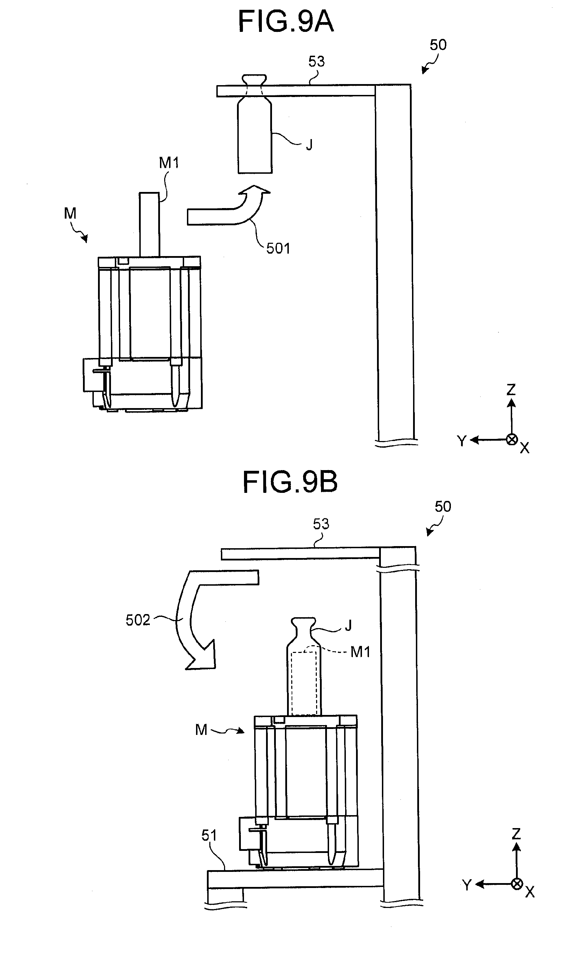

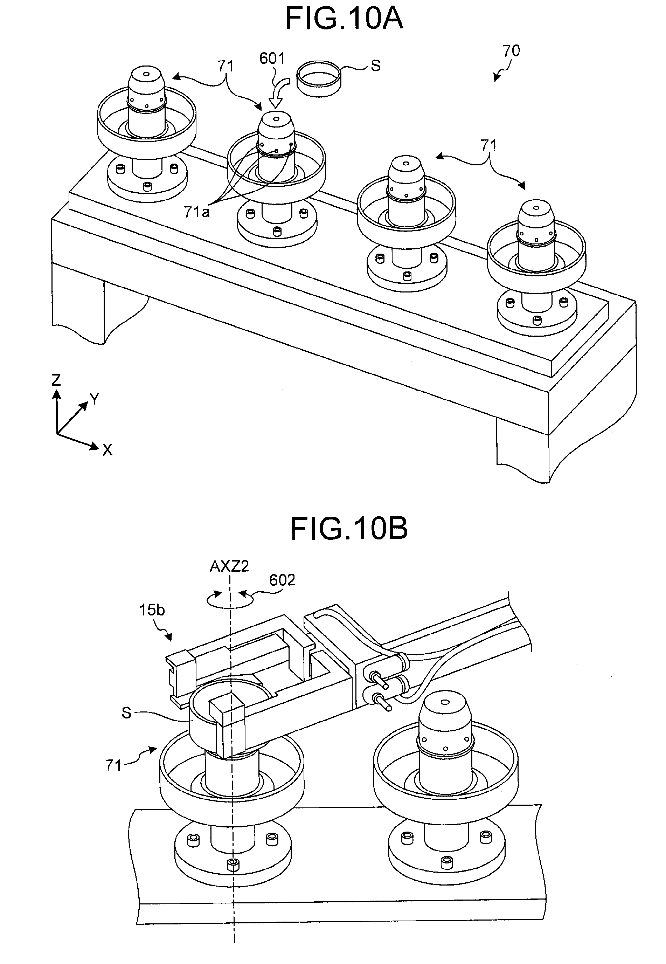

Described here are a preparation operation for seal insertion, and grease application to the seal member with reference to FIGS. 9A to 10B. FIGS. 9A and 9B are diagrams illustrating the preparation operation for seal insertion. FIG. 10A is a schematic perspective view of the grease application device 70. FIG. 10B is a diagram illustrating a grease application operation.

As illustrated in FIG. 9A, a seal insertion jig J is held by the jig hanger 53 before seal insertion starts. The seal insertion jig J has a hollow structure with a constriction in a neck position, and is hung by the jig hanger 53 with the neck position held between the two plates at the top end of the jig hanger 53.

While transferred from the accuracy measurement device 40 by the robot 10, the motor M is turned into a position with the load side thereof facing upward in the vertical direction. The shaft M1 is then inserted into the seal insertion jig J as indicated by an arrow 501 in FIG. 9A.

As illustrated in FIG. 9B, the motor M is transferred in the direction indicated by an arrow 502, so that the seal insertion jig J is pulled out from the jig hanger 53 with the shaft M1 kept inserted therein, and the motor M is placed on the table 51.

The grease application device 70 applies grease to the seal member. As illustrated in FIG. 10A, the grease application device 70 includes a plurality of applicators 71 each having a different diameter corresponding to the inside diameter of a ring-shaped seal member S. That is, the seal member S is pushed on to an applicator 71 having a diameter corresponding to the inside diameter of the seal member S (see an arrow 601 in FIG. 10A).

Each of the applicators 71 includes apertures 71a. The apertures 71a are disposed at regular intervals and discharge grease.

Grease application to the seal member S is performed by the robot 10. In other words, as illustrated in FIG. 10B, the seal member S is held by the above-described second gripper 15b (see FIG. 3A) of the robot 10 and is pushed on to an applicator 71.

The seal member S is cut out by, for example, a seal cutting device (not illustrated) and stored in the seal storage 60 (see FIG. 1) in advance, and is taken out by the robot 10.

As illustrated in FIG. 10B, the seal member S is pushed on to an applicator 71 while rotated around an axis AXZ2 that is substantially parallel to the vertical direction (see a double-pointed arrow 602 in FIG. 10B), for example. This applies grease to the inner circumference of the seal member S. The seal member S may be rotated in a position slightly tilted relative to the direction perpendicular to the axis AXZ2.

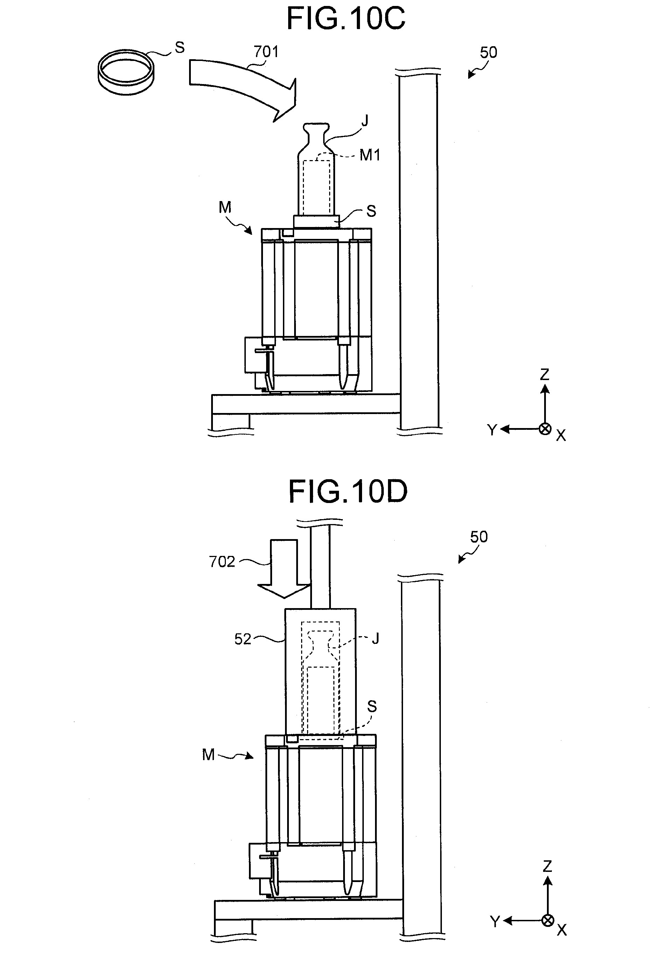

Described next is a seal insertion operation performed by the seal insertion device 50 with reference to FIGS. 10C and 10D. FIGS. 10C and 10D are diagrams illustrating the seal insertion operation.

As illustrated in FIG. 10C, the seal member S to which grease has been applied by the grease application device 70 is put on to the seal insertion jig J (see an arrow 701 in FIG. 10C) by the robot 10. The seal insertion jig J is still mounted on the shaft M1 of the motor M.

As illustrated in FIG. 10D, the seal insertion unit 52 of the seal insertion device 50 is driven in the direction indicated by an arrow 702 (i.e., downward in the vertical direction). The seal insertion unit 52 has the hollow structure as illustrated in FIG. 10D, and allows the seal insertion jig J to enter thereinto, thereby inserting only the seal member S into the sealed part M3b (see FIG. 6B).

Described next is an example of a configuration of the adhesive application device 80 with reference to FIGS. 11A and 11B. FIG. 11A is a schematic side view of the adhesive application device 80, and FIG. 11B is a diagram illustrating an example of a camera 82 provided in the adhesive application device 80.

As illustrated in FIG. 11A, the adhesive application device 80 includes a nozzle 81 and the camera 82.

The nozzle 81 is disposed with a discharge port facing downward in the vertical direction and supplies adhesive in a certain amount in accordance with a discharge instruction by the control device. The camera 82 captures an image of an application state of the adhesive so that the application state is checked with the captured image data.

While transferred from the seal insertion device 50 by the robot 10, the motor M is turned into a position with the anti-load side facing upward in the vertical direction, and is put in a position below the nozzle 81 by the robot 10. The nozzle 81 discharges adhesive and injects it to the adhering holes M4b (see FIG. 6C).

The adhering holes M4b correspond to a gap between the outer race of a bearing and the bracket M4 on the anti-load side of the motor M. The injected adhesive fixes the outer race of the bearing and the bracket M4.

The robot 10 moves the motor M in the direction indicated by an arrow 801 in FIG. 11A and positions the motor M in an image-capturing region of the camera 82. The camera 82 captures an image of the motor M and sends captured image data to the control device.

The control device analyses the captured data. When the application state of the adhesive is good, the control device instructs the robot 10 to transfer the motor M to the buffer stage 90. When the application state is not good, the control device instructs the robot 10 to transfer the motor M back to the adhesive application device 80 so that the adhesive application device 80 applies the adhesive again to the motor M.

When the adhesive contains, for example, a fluorescence coloring agent, the adhesive application device 80 may be provided with an ultraviolet light 83 near the camera 82 as illustrated in FIG. 11B. This enables the control device to visually determine the application state of the adhesive more accurately. The ultraviolet light 83 may also be provided to the adhesive application device 80 when the adhesive is an ultraviolet curable one.

Described next is an example of a configuration of the buffer stage 90 with reference to FIG. 12. FIG. 12 is a schematic perspective view of the buffer stage 90.

As illustrated in FIG. 12, the buffer stage 90 includes a plurality of stands 91 arranged in a multistage manner. Each stand 91 includes a motor holder 91a.

The motor M to which adhesive is applied by the adhesive application device 80 is transferred to the buffer stage 90 by the robot 10 and placed on the motor holder 91a with the anti-load side facing upward in the vertical direction.

Each stand 91 may be provided with a pressure-sensitive sensor to inform the control device whether the motor M is placed on the stand 91.

The motor M is kept on the buffer stage 90 for a specified time period for drying the adhesive, and then transferred to the carry-out path 100 (see FIG. 1) by the robot 10, so that the motor M is sent to the following process such as mounting of an encoder. The time period for drying adhesive is specified by the control device.

As described above, the robot system according to the embodiment includes a robot and an accuracy measurement device. The robot transfers a workpiece, such as a motor, formed to include a rotation shaft. The accuracy measurement device holds the rotation shaft of the workpiece transferred by the robot to be substantially parallel to the vertical direction, and measures assembly accuracy of the workpiece while rotating the rotation shaft to rotate the whole of the workpiece.

The robot system according to the embodiment can accurately measure assembly accuracy of a workpiece formed to include a rotation shaft.

Although the above embodiment mainly describes a case in which the robot system measures geometric characteristics such as squareness and concentricity of brackets of a motor, the robot system may measure any indicator that represents assembly accuracy and, for example, may measure dimensions. The subject to be measured is not limited to the brackets, but the housing may be measured.

Although the above embodiment describes a case in which the workpiece is a motor, the workpiece may be any kind of workpiece as long as it is formed to include a rotation shaft such as a shaft.

Although the above embodiment describes a case in which the seal insertion device and the adhesive application device are configured as separate devices, the embodiment is not limited to this. These devices may be configured as, for example, one mounting device that mounts a certain member around the rotation shaft.

In the same manner, the cogging torque measurement device and the accuracy measurement device may be configured as one device. In this case, the device may hold the motor such that the shaft of the motor is positioned along the vertical direction and may measure cogging torque by releasing the brake and only rotating the shaft.

Although the above embodiment describes a single-arm robot as an example, the embodiment is not limited to this. The robot system may use a dual-arm robot and a multi-arm robot including equal to or larger than three arms, for example. Although the embodiment describes a six-axis robot as an example, this does not limit the number of axes of the robot.

The shape or form of the devices, members, and workpiece described in the above embodiment is not limited to what is illustrated in the accompanying drawings. Thus, a part from which assembly accuracy is measured may be determined depending on a shape or a form of the workpiece.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

- 1: Robot system
- 2: Cell
- 10: Robot
- 11: First arm part
- 12: Second arm part
- 13: Third arm part
- 14: Fourth arm part
- 15: Robot hand
- 15a: First gripper
- 15b: Second gripper
- 15c: Gripper driver
- 20: Carry-in path
- 30: Cogging torque measurement device
- 31: Motor slider
- 32: First positioner
- 33: Second positioner
- 34: Rotation mechanism
- 34a: Outer shaft
- 35: Torque measurement unit
- 36: Brake releasing unit
- 37: Axial run-out measurement unit
- 37a: Sensor
- 40: Accuracy measurement device
- 41: First holder
- 42: Second holder
- 42a: Base
- 43: First servomotor
- 44: Second servomotor
- 45: Slide groove
- 46a: First sensor
- 46b: Second sensor
- 46c: Third sensor
- 46d: Fourth sensor
- 50: Seal insertion device
- 51: Table
- 52: Seal insertion unit
- 53: Jig hanger
- 60: Seal storage
- 70: Grease application device
- 71: Applicator
- 71a: Aperture
- 80: Adhesive application device
- 81: Nozzle
- 82: Camera
- 83: Ultraviolet light
- 90: Buffer stage
- 91: Stand
- 91a: Motor holder
- 100: Carry-out path
- J: Seal insertion jig
- M: Motor
- M1: Shaft
- M1a: Aperture
- M1b: Aperture
- M2: Housing
- M3: Bracket
- M3a: Ridge
- M3b: Sealed part
- M4: Bracket
- M4a: Recess
- M4b: Adhering hole
- S: Seal member

## Claims

1. A robot system comprising:
a robot that transfers a workpiece formed to include a rotation shaft; and
an accuracy measurement device that holds the rotation shaft of the workpiece transferred by the robot to be substantially parallel to a vertical direction, and measures assembly accuracy of the workpiece while rotating the rotation shaft to rotate a whole of the workpiece.

2. The robot system according to claim 1, wherein
the workpiece includes a pair of brackets that rotatably support the rotation shaft; and
the accuracy measurement device simultaneously measures squareness and concentricity of the brackets relative to the rotation shaft.

3. The robot system according to claim 1 or 2, wherein
the accuracy measurement device includes:
a first holder that is connected to a driving source and holds an end of the rotation shaft on a vertical-direction lower side; and
a second holder that is slidably disposed along the vertical direction and holds another end of the rotation shaft on a vertical-direction upper side, and
the accuracy measurement device holds the rotation shaft placed on the first holder by the robot by sliding the second holder to push the rotation shaft between the first holder and the second holder, and rotates the rotation shaft by transferring rotation of the driving source through the first holder.

4. The robot system according to claim 3, wherein
the first holder and the second holder each have a leading end formed in a shape of a substantially circular cone, and
the accuracy measurement device holds the rotation shaft by fitting the leading end into an aperture disposed on each end of the rotation shaft.

5. The robot system according to claim 1, wherein
the workpiece includes a motor,
the robot system further comprises:
a rotation mechanism that rotates the rotation shaft in a non-excitation state by holding the rotation shaft from an anti-load side of the motor; and
a cogging torque measurement device that measures axial run-out of the rotation shaft and cogging torque of the motor when the rotation shaft is rotated by the rotation mechanism.

6. The robot system according to claim 5, further comprising:
a mounting device that mounts a predetermined member on the motor transferred by the robot around the rotation shaft when a measurement result performed by the accuracy measurement device and the cogging torque measurement device falls within an allowable range.

7. The robot system according to claim 6, wherein the mounting device mounts adhesive and a seal member as the predetermined member, the adhesive is applied to a gap between a bracket and an outer race of a bearing provided in the bracket, and the seal member seals a circumference of the rotation shaft.
